# EUROPEAN PATENT APPLICATION

(11) **EP 4 350 799 A1**
(43) Date of publication of application: **10.04.2024**
(21) Application number: 22815740.0
(22) Date of filing: 19.04.2022
(51) Int. Cl.: H01M 4/13, H01M 4/36, H01M 4/62

(54) **POSITIVE ELECTRODE MATERIAL, POSITIVE ELECTRODE, AND BATTERY**

(30) Priority: 31.05.2021 JP 2021091712
(71) Applicant: Panasonic Intellectual Property Management Co., Ltd., Kadoma-shi, Osaka 571-0057 (JP)
(72) Inventor: SUGIMOTO Yuta, Tokyo 103-0022 (JP); HASHIMOTO Kazuya, Tokyo 103-0022 (JP); MIYAZAKI Akinobu, Tokyo 103-0022 (JP); NAGAO Kenji, Tokyo 103-0022 (JP); SASAKI Izuru, Tokyo 103-0022 (JP)
(74) Representative: Grünecker Patent- und Rechtsanwälte PartG mbB
(86) International application number: PCT/JP2022/018139
(87) International publication number: WO 2022/254984

(57) **Abstract**

A positive electrode material 10 includes a positive electrode active material 101, a coating layer 102, and a second solid electrolyte 105. The coating layer 102 contains a first solid electrolyte and coats at least a portion of a surface of the positive electrode active material 101. The first solid electrolyte contains Li, M, and X, where M is at least one selected from the group consisting of metalloid elements and metal elements other than Li, and X is at least one selected from the group consisting of F, Cl, Br, and I. The second solid electrolyte 105 is in indirect contact with the positive electrode active material 101 with the coating layer 102 disposed between the second solid electrolyte 105 and the positive electrode active material 101. A ratio of a volume of the first solid electrolyte to a total volume of the first solid electrolyte and the second solid electrolyte 105 is greater than or equal to 4% and less than or equal to 60%.

## Description

### Technical Field

The present disclosure relates to a positive electrode material, a positive electrode, and a battery.

### Background Art

Patent Literature 1 describes a method for producing a composite active material including coating a positive electrode active material with an oxide solid electrolyte and, further, with a sulfide solid electrolyte.

### Citation List

### Patent Literature

PTL 1: Japanese Unexamined Patent Application Publication No. 2016-18735

### Summary of Invention

In the related art, there is a need for improving the safety of a battery.

The present disclosure provides a positive electrode material including a positive electrode active material, a coating layer, and a second solid electrolyte. The coating layer contains a first solid electrolyte and coats at least a portion of a surface of the positive electrode active material. The first solid electrolyte contains Li, M, and X, where M is at least one selected from the group consisting of metalloid elements and metal elements other than Li, and X is at least one selected from the group consisting of F, Cl, Br, and I. The second solid electrolyte is in indirect contact with the positive electrode active material with the coating layer disposed between the second solid electrolyte and the positive electrode active material. A ratio of a volume of the first solid electrolyte to a total volume of the first solid electrolyte and the second solid electrolyte is greater than or equal to 4% and less than or equal to 60%.

With the present disclosure, the safety of a battery can be improved.

### Brief Description of Drawings

[Fig. 1] Fig. 1 is a cross-sectional view illustrating a schematic configuration of a positive electrode material of a first embodiment.
[Fig. 2] Fig. 2 is a cross-sectional view illustrating a schematic configuration of a positive electrode material of a modified embodiment.
[Fig. 3] Fig. 3 is a cross-sectional view illustrating a schematic configuration of a battery of a second embodiment.

### Description of Embodiments

### (Underlying Knowledge Forming Basis of the Present Disclosure)

Batteries that use a solid electrolyte are generally considered to be safe; however, this is not always true. For example, in some instances, oxygen is formed from a positive electrode active material. The formed oxygen oxidizes the solid electrolyte and increases a temperature of the battery. As a result, a casing holding the battery may suffer deterioration or damage, and a malfunction of the battery may occur. Accordingly, batteries that use a solid electrolyte are also desired to have improved safety.

### (Overview of Aspects of the Present Disclosure)

According to a first aspect of the present disclosure, a positive electrode material includes
a positive electrode active material;
a coating layer containing a first solid electrolyte and coating at least a portion of a surface of the positive electrode active material; and
a second solid electrolyte, in which
the first solid electrolyte contains Li, M, and X, where M is at least one selected from the group consisting of metalloid elements and metal elements other than Li, and X is at least one selected from the group consisting of F, Cl, Br, and I,
the second solid electrolyte is in indirect contact with the positive electrode active material with the coating layer disposed between the second solid electrolyte and the positive electrode active material, and
a ratio of a volume of the first solid electrolyte to a total volume of the first solid electrolyte and the second solid electrolyte is greater than or equal to 4% and less than or equal to 60%.

The positive electrode material of the first aspect can improve the safety of a battery.

In a second aspect of the present disclosure, the positive electrode material according to the first aspect may be one in which, for example, the second solid electrolyte contains Li and S. Sulfide solid electrolytes have high ionic conductivity and, therefore, can improve charge-discharge efficiency of a battery. On the other hand, sulfide solid electrolytes exhibit poor oxidation resistance in some cases. In the instance where the second solid electrolyte that is included in a battery is a sulfide solid electrolyte, the technology of the present disclosure can be used to produce a superior effect.

In a third aspect of the present disclosure, the positive electrode material according to the first or second aspect may be one in which, for example, M includes yttrium. In the instance where M includes Y, a halide solid electrolyte exhibits high ionic conductivity.

In a fourth aspect of the present disclosure, the positive electrode material according to any one of the first to third aspects may be one in which, for example, the first solid electrolyte is represented by Formula 1, shown below, and α, β, and γ are each independently a value greater than 0. In the instance where a halide solid electrolyte represented by Formula 1 is used in a battery, power characteristics of the battery can be improved.

Li_{α}M_{β}X_{γ} (1)

In a fifth aspect of the present disclosure, the positive electrode material according to any one of the first to fourth aspects may be one in which, for example, the coating layer includes a first coating layer and a second coating layer, the first coating layer contains the first solid electrolyte, and the second coating layer contains a base material; and the first coating layer is located outside of the second coating layer. With this configuration, the safety of a battery can be further improved.

In a sixth aspect of the present disclosure, the positive electrode material according to the fifth aspect may be one in which, for example, the base material contains an oxide solid electrolyte having lithium ion conductivity. In the instance where an oxide solid electrolyte is used as the base material, the charge-discharge efficiency of a battery can be improved.

In a seventh aspect of the present disclosure, the positive electrode material according to the fifth or sixth aspect may be one in which, for example, the base material contains lithium niobate. With this configuration, the charge-discharge efficiency of a battery can be improved.

According to an eighth aspect of the present disclosure, a positive electrode includes the positive electrode material according to any one of the first to seventh aspects. With this configuration, the safety of a battery can be improved.

According to a ninth aspect of the present disclosure, a battery includes the positive electrode according to the eighth aspect. With the present disclosure, the safety of a battery can be improved.

Embodiments of the present disclosure will be described below with reference to the drawings. The present disclosure is not limited to the embodiments described below.

### (First Embodiment)

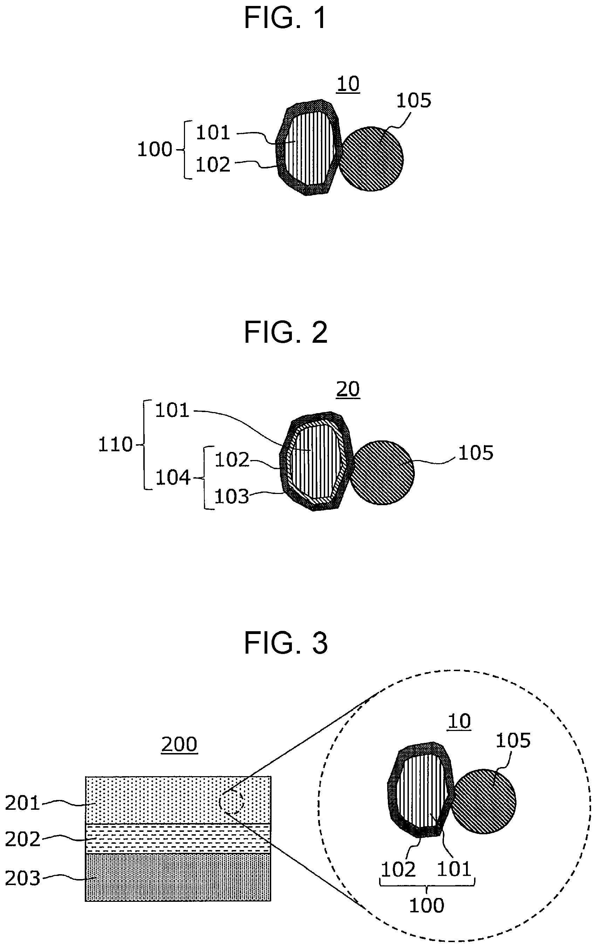

Fig. 1 is a cross-sectional view illustrating a schematic configuration of a positive electrode material of a first embodiment. A positive electrode material 10 includes a positive electrode active material 101, a coating layer 102, and a second solid electrolyte 105. The coating layer 102 contains a first solid electrolyte. The coating layer 102 coats at least a portion of a surface of the positive electrode active material 101. The coating layer 102 may coat only a portion of the surface of the positive electrode active material 101 or uniformly coat the surface of the positive electrode active material 101. The positive electrode active material 101 and the coating layer 102 constitute a coated active material 100. The second solid electrolyte 105 is in indirect contact with the positive electrode active material 101 with the coating layer 102 disposed between the second solid electrolyte 105 and the positive electrode active material 101.

The first solid electrolyte in the coating layer 102 contains Li, M, and X. M is at least one selected from the group consisting of metalloid elements and metal elements other than Li. X is at least one selected from the group consisting of F, Cl, Br, and I. In the positive electrode material 10, a ratio V1/Vt, which is a ratio of V1 to Vt, is, in percentage, greater than or equal to 4% and less than or equal to 60%, where V1 is a volume of the first solid electrolyte, and Vt is a total volume of the first solid electrolyte and the second solid electrolyte 105.

The "metalloid elements" include B, Si, Ge, As, Sb, and Te.

The "metal elements" include all the elements other than hydrogen from Groups 1 to 12 of the periodic table and all the elements other than B, Si, Ge, As, Sb, Te, C, N, P, O, S, or Se from Groups 13 to 16 of the periodic table. That is, the metal elements are elements that can become a cation in instances in which any of the elements forms an inorganic compound with a halogen compound.

The first solid electrolyte may be a solid electrolyte containing a halogen, that is, a so-called halide solid electrolyte. Halide solid electrolytes have excellent oxidation resistance. Accordingly, coating the positive electrode active material 101 with the first solid electrolyte can inhibit the oxidation of the second solid electrolyte 105. Consequently, a battery that uses the positive electrode material 10 is inhibited from generating heat, and as a result, the battery that uses the positive electrode material 10 can have improved safety.

When the ratio V1/Vt is excessively low, the positive electrode active material 101 is not sufficiently coated with the first solid electrolyte, and, therefore, the above-described effect may not be sufficiently produced. When the ratio V1/Vt is excessively high, the positive electrode material 10 may not have sufficient electron conductivity, and the positive electrode material 10 may not have sufficient ionic conductivity. Desirably, the ratio V1/Vt may be less than or equal to 40%.

The total volume Vt of the first solid electrolyte and the second solid electrolyte 105 is the sum of the volume V1 of the first solid electrolyte and a volume V2 of the second solid electrolyte 105. The volume V1 of the first solid electrolyte is a total volume of the first solid electrolyte in the positive electrode material 10, which is in the form of a powder. The volume V2 of the second solid electrolyte 105 is a total volume of the second solid electrolyte 105 in the powder of the positive electrode material 10. That is, the ratio V1/Vt is a value determined from an entirety of a specific amount of the powder of the positive electrode material 10.

The ratio V1/Vt can be calculated from amounts of charge of the materials or can be calculated in the following manner. Specifically, a cross section of a positive electrode that uses the positive electrode material 10 is examined with a scanning electron microscope (SEM-EDX), and two-dimensional elemental mapping images are acquired. Measurement conditions for the scanning electron microscope used to acquire two-dimensional mapping images include, for example, a magnification of 1000× to 3000× and an acceleration voltage of 5 kV. The two-dimensional mapping images are acquired at a resolution of 1280×960. The volume of the positive electrode active material 101, the volume V1 of the first solid electrolyte, and the volume V2 of the second solid electrolyte 105 can be determined by analyzing the two-dimensional elemental mapping images and using the number of pixels corresponding to the elements present in the positive electrode active material 101, the first solid electrolyte, and the second solid electrolyte 105.

In the positive electrode material 10, the second solid electrolyte 105 and the coated active material 100 may be in contact with each other. In this case, the first solid electrolyte and the second solid electrolyte 105 are in contact with each other. The positive electrode material 10 may include multiple particles of second solid electrolyte 105 and multiple particles of coated active material 100.

In the positive electrode material 10, a ratio "v1:(100 - v1)", which is a ratio between a volume of the positive electrode active material 101 and a volume of the solid electrolytes, may satisfy 30 ≤ v1 ≤ 95. When 30 ≤ v1 is satisfied, a sufficient energy density of a battery is ensured. When v1 ≤ 95 is satisfied, a high-power operation of a battery can be achieved. The volume of the solid electrolytes is a total volume of the first solid electrolyte and the second solid electrolyte 105.

### <Positive Electrode Active Material>

The positive electrode active material 101 includes a material that has a property of occluding and releasing metal ions (e.g., lithium ions). Examples of the positive electrode active material 101 include lithium transition metal oxides, transition metal fluorides, polyanionic materials, fluorinated polyanionic materials, transition metal sulfides, transition metal oxysulfides, and transition metal oxynitrides. In particular, in instances where a lithium transition metal oxide is used as the positive electrode active material 101, the cost of production of a battery can be reduced, and an average discharge voltage of the battery can be increased. Examples of the lithium transition metal oxides include Li(Ni,Co,Al)O₂, Li(Ni,Co,Mn)O₂, and LiCoO₂.

The positive electrode active material 101 has a shape of particles, for example. The shape of the particles of the positive electrode active material 101 is not particularly limited. The shape of the particles of the positive electrode active material 101 may be a spherical shape, an ellipsoidal shape, a flake shape, or a fiber shape.

The coated active material 100 may have a median diameter of greater than or equal to 0.1 µm and less than or equal to 100 µm. When the median diameter of the coated active material 100 is greater than or equal to 0.1 µm, the coated active material 100 and the second solid electrolyte 105 can form a favorable state of dispersion in the positive electrode material 10. As a result, charge-discharge characteristics of a battery are improved. When the median diameter of the coated active material 100 is less than or equal to 100 µm, a sufficient lithium diffusion rate is ensured in the coated active material 100. Consequently, a high-power operation of a battery can be achieved.

The median diameter of the coated active material 100 may be greater than the median diameter of the second solid electrolyte 105. In this case, the coated active material 100 and the second solid electrolyte 105 can form a favorable state of dispersion.

In this specification, the "median diameter" is a particle diameter corresponding to a cumulative volume of 50% in a volume-based particle size distribution. The volume-based particle size distribution is measured, for example, with a laser diffraction analyzer or an image analyzer.

### <Coating Layer>

The coating layer 102 contains a first solid electrolyte. The first solid electrolyte has an ionic conductivity. Typically, the ionic conductivity is a lithium ion conductivity. The coating layer 102 is disposed on the surface of the positive electrode active material 101. The coating layer 102 may contain the first solid electrolyte as a major component or may contain only the first solid electrolyte. The term "major component" refers to a component that is present in the largest amount in terms of a mass ratio. The expression "contain only the first solid electrolyte" means that no intentionally added materials other than the first solid electrolyte are present while incidental impurities may be present. Examples of the incidental impurities include raw materials for the first solid electrolyte and by-products that are formed during the preparation of the first solid electrolyte. A ratio of a mass of the incidental impurities to a total mass of the coating layer 102 may be less than or equal to 5%, less than or equal to 3%, less than or equal to 1%, or less than or equal to 0.5%.

The first solid electrolyte is a material containing Li, M, and X. M and X are as described above. Such materials have excellent ionic conductivity and oxidation resistance. Accordingly, the coated active material 100, which includes the coating layer 102 that includes the first solid electrolyte, improves charge-discharge efficiency of a battery and thermal stability of the battery.

The halide solid electrolyte that serves as the first solid electrolyte is, for example, represented by Formula 1, shown below. In Formula 1, α, β, and γ are each independently a value greater than 0. γ may be 4 to 6.

Li_{α}M_{β}X_{γ} (1)

Halide solid electrolytes represented by Formula 1 have higher ionic conductivity than halide solid electrolytes formed only of Li and a halogen element, such as LiI. Accordingly, in instances where a halide solid electrolyte represented by Formula 1 is used in a battery, the charge-discharge efficiency of the battery can be improved.

M may include Y (=yttrium). That is, the metal element that is included in the halide solid electrolyte may be Y. In instances where M includes Y, the halide solid electrolyte exhibits high ionic conductivity.

The halide solid electrolyte containing Y is, for example, represented by Formula 2, shown below.

LiₐMe_{b}Y_{c}X₆ (2)

In Formula 2, a + mb + 3c = 6 and c > 0 are satisfied. In Formula 2, Me includes at least one selected from the group consisting of metalloid elements and metal elements other than Li or Y. m is a valence of Me. In instances where Me includes multiple elements, mb is equal to the sum of the products of each of the ratios of the respective elements multiplied by the respective valences of the elements. For example, when Me includes an element Me1 and an element Me2, the ratio of the element Me1 is b1, the valence of the element Me1 is m1, the ratio of the element Me2 is b2, and the valence of the element Me2 is m2, mb = m1b1 + m2b2 holds. In Formula 2, X is at least one selected from the group consisting of F, Cl, Br, and I.

Me may be at least one selected from the group consisting of Mg, Ca, Sr, Ba, Zn, Sc, Al, Ga, Bi, Zr, Hf, Ti, Sn, Ta, Gd, and Nb.

The halide solid electrolyte may be any of the following materials. The following halide solid electrolytes exhibit high ionic conductivity. Accordingly, the ionic conductivity of the positive electrode material 10 is improved. Consequently, the charge-discharge efficiency of a battery that uses the positive electrode material 10 is improved.

The halide solid electrolyte may be a material represented by Formula A1, shown below. In Formula A1, X is at least one selected from the group consisting of Cl, Br, and I. In Formula A1, 0 < d < 2 is satisfied.

Li_{6-3d}Y_{d}X₆ (A1)

The halide solid electrolyte may be a material represented by Formula A2, shown below. In Formula A2, X is at least one selected from the group consisting of Cl, Br, and I.

Li₃YX₆ (A2)

The halide solid electrolyte may be a material represented by Formula A3, shown below. In Formula A3, 0 < δ ≤ 0.15 is satisfied.

Li_{3-3δ}Y_{1+δ}Cl₆ (A3)

The halide solid electrolyte may be a material represented by Formula A4, shown below. In Formula A4, 0 < δ ≤ 0.25 is satisfied.

Li_{3-3δ}Y_{1+δ}Br₆ (A4)

The halide solid electrolyte may be a material represented by Formula A5, shown below. In Formula A5, Me is at least one selected from the group consisting of Mg, Ca, Sr, Ba, and Zn. In Formula A5, -1 < δ < 2, 0 < a < 3, 0 < (3 - 3δ + a), 0 < (1 + δ - a), 0 ≤ x ≤ 6, 0 ≤ y ≤ 6, and (x + y) ≤ 6 are satisfied.

Li_{3-3δ+a}Y_{1+δ-a}MeₐCl_{6-x-y}BrₓI_{y} (A5)

The halide solid electrolyte may be a material represented by Formula A6, shown below. In Formula A6, Me is at least one selected from the group consisting of Al, Sc, Ga, and Bi. In Formula A6, -1 < δ < 1, 0 < a < 2, 0 < (1 + δ - a), 0 ≤ x ≤ 6, 0 ≤ y ≤ 6, and (x + y) ≤ 6 are satisfied.

Li_{3-3δ}Y_{1+δ-a}MeₐCl_{6-x-y}BrₓI_{y} (A6)

The halide solid electrolyte may be a material represented by Formula A7, shown below. In Formula A7, Me is at least one selected from the group consisting of Zr, Hf, and Ti. In Formula A7, -1 < δ < 1, 0 < a < 1.5, 0 < (3 - 3δ - a), 0 < (1 + δ - a), 0 ≤ x ≤ 6, 0 ≤ y ≤ 6, and (x + y) ≤ 6 are satisfied.

Li_{3-3δ-a}Y_{1+δ-a}MeₐCl_{6-x-y}BrₓI_{y} (A7)

The halide solid electrolyte may be a material represented by Formula A8, shown below. In Formula A8, Me is at least one selected from the group consisting of Ta and Nb. In Formula A8, -1 < δ < 1,0 < a < 1.2, 0 < (3 - 3δ - 2a), 0 < (1 + δ - a), 0 ≤ x ≤ 6, 0 ≤ y ≤ 6, and (x + y) ≤ 6 are satisfied.

Li_{3-3δ-2a}Y_{1+δ-a}MeₐCl_{6-x-y}BrₓI_{y} (A8)

Specific examples of the halide solid electrolyte include Li₃YX₆, Li₂MgX₄, Li₂FeX₄, Li(Al,Ga,In)X₄, and Li₃(Al,Ga,In)X₆. In these formulae, X is at least one selected from the group consisting of F, Cl, Br, and I.

In the present disclosure, regarding the elements in formulae, expressions such as "(Al,Ga,In)" mean at least one element selected from the group of the elements in the parenthesis. That is, "(Al,Ga,In)" has the same meaning as "at least one selected from the group consisting of Al, Ga, and In". The same applies to other elements.

Examples of representative compositions of Li₃YX₆ include Li₃YBr₂Cl₄. The halide solid electrolyte may be Li₃YBr₂Cl₄.

The halide solid electrolyte may be Li_{2.7}Y_{1.1}Cl₆, Li₃YBr₆, or Li_{2.5}Y_{0.5}Zr_{0.5}Cl₆.

The coating layer 102 has a thickness of, for example, greater than or equal to 1 nm and less than or equal to 500 nm. In the instance where the thickness of the coating layer 102 is appropriately adjusted, contact between the positive electrode active material 101 and the second solid electrolyte 105 can be sufficiently inhibited. The thickness of the coating layer 102 can be determined as follows: a thin specimen is prepared from the coated active material 100 with a method such as ion milling, and a cross section of the coated active material 100 is examined with a transmission electron microscope. A thickness is measured at several random positions (e.g., five points), and an average of the thicknesses can be taken as the thickness of the coating layer 102.

The halide solid electrolyte may be a sulfur-free solid electrolyte. In this instance, the formation of a sulfur-containing gas, such as a hydrogen sulfide gas, from the solid electrolyte can be avoided. The "sulfur-free solid electrolyte" is a solid electrolyte that is represented by a formula that does not include the sulfur element. Accordingly, solid electrolytes containing a very small amount of sulfur, for example, solid electrolytes having a sulfur content of less than or equal to 0.1 mass%, are classified into the "sulfur-free solid electrolyte". The halide solid electrolyte may contain an additional anion, in addition to the anion of the halogen element. The additional anion may be that of oxygen.

A shape of the halide solid electrolyte is not particularly limited and may be, for example, a needle shape, a spherical shape, an ellipsoidal shape, or the like. For example, the shape of the halide solid electrolyte may be a particle shape.

The halide solid electrolyte can be produced in the following manner. An example of a method for producing the halide solid electrolyte represented by Formula 1 is described below.

Raw material powders of halides are provided in accordance with a desired composition. The halides may each be a compound of two elements including a halogen element. For example, in instances where Li₃YCl₆ is to be prepared, raw material powders of LiCl and YCl₃ are to be provided in a molar ratio of 3:1. In this instance, the elemental species of M and X in Formula 1 can be determined by appropriate selection of the types of the raw material powders. The values of α, β, and γ in Formula 1 can be adjusted by adjusting the types of the raw material powders, a compounding ratio between the raw material powders, and a synthesis process.

The raw material powders are mixed and ground together, and subsequently, the raw material powders are reacted with each other with a mechanochemical milling method. Alternatively, after the raw material powders are mixed and ground together, the raw material powders may be heat-treated in a vacuum or an inert atmosphere. The heat treatment is performed, for example, under the conditions of 100°C to 550°C and 1 hour or more. By performing these steps, the halide solid electrolyte can be prepared.

The constitution of the crystalline phase (i.e., crystal structure) of the halide solid electrolyte can be adjusted and determined by the method with which the raw material powders are reacted with each other and the conditions for the reaction.

### <Second Solid Electrolyte>

The second solid electrolyte 105 may include at least one selected from the group consisting of a halide solid electrolyte, a sulfide solid electrolyte, an oxide solid electrolyte, a polymeric solid electrolyte, and a complex hydride solid electrolyte.

Examples of the halide solid electrolytes include the above-described materials of the first solid electrolyte. That is, the second solid electrolyte 105 may have a composition that is the same as or different from that of the first solid electrolyte.

Oxide solid electrolytes are solid electrolytes containing oxygen. The oxide solid electrolyte may contain an additional anion, in addition to the oxygen anion. The additional anion may be an anion other than that of sulfur or those of halogen elements.

Examples of the oxide solid electrolyte include NASICON-type solid electrolytes, typified by LiTi₂(PO₄)₃ and element-substituted derivatives thereof; (LaLi)TiO₃-system perovskite-type solid electrolytes; LISICON-type solid electrolytes, typified by Li₁₄ZnGe₄O₁₆, Li₄SiO₄, LiGeO₄, and element-substituted derivatives thereof; garnet-type solid electrolytes, typified by Li₇La₃Zr₂O₁₂ and element-substituted derivatives thereof; Li₃PO₄ and N-substituted derivatives thereof; and glass or glass-ceramics including a Li-B-O compound-containing base material and one or more additional materials, in which examples of the Li-B-O compound include LiBO₂ and Li₃BO₃, and examples of the additional materials include Li₂SO₄ and Li₂CO₃.

Examples of the polymeric solid electrolyte include a compound of a polymeric compound and a lithium salt. The polymeric compound may have an ethylene oxide structure. Polymeric compounds having an ethylene oxide structure can contain large amounts of a lithium salt. Accordingly, the ionic conductivity can be further increased. Examples of the lithium salt include LiPF₆, LiBF₄, LiSbF₆, LiAsF₆, LiSO₃CF₃, LiN(SO₂F)₂, LiN(SO₂CF₃)₂, LiN(SO₂C₂F₅)₂, LiN(SO₂CF₃)(SO₂C₄F₉), and LiC(SO₂CF₃)₃. One lithium salt selected from these may be used alone, or a mixture of two or more lithium salts selected from these may be used.

Examples of the complex hydride solid electrolyte include LiBH₄-LiI and LiBH₄-P₂S₅.

The second solid electrolyte 105 may contain Li and S. In other words, the second solid electrolyte 105 may contain a sulfide solid electrolyte. Sulfide solid electrolytes have high ionic conductivity and, therefore, can improve the charge-discharge efficiency of a battery. On the other hand, sulfide solid electrolytes exhibit poor oxidation resistance in some cases. In the instance where the second solid electrolyte 105 that is included in a battery is a sulfide solid electrolyte, the technology of the present disclosure can be used to produce a superior effect.

Examples of the sulfide solid electrolyte include Li₂S-P₂S₅, Li₂S-SiS₂, Li₂S-B₂S₃, Li₂S-GeS₂, Li_{3.25}Ge_{0.25}P_{0.75}S₄, and Li₁₀GeP₂S₁₂. To any of these, LiX, Li₂O, MO_{q}, LiₚMO_{q}, and/or the like may be added. In the LiX, X is at least one selected from the group consisting of F, Cl, Br, and I. In the MO_{q} and LiₚMO_{q}, the element M is at least one selected from the group consisting of P, Si, Ge, B, Al, Ga, In, Fe, and Zn. In the MO_{q} and LiₚMO_{q}, p and q are each independently a natural number.

The second solid electrolyte 105 may include two or more of the above-mentioned materials of solid electrolytes. For example, the second solid electrolyte 105 may include a halide solid electrolyte and a sulfide solid electrolyte.

The second solid electrolyte 105 may have a lithium ion conductivity higher than the lithium ion conductivity of the first solid electrolyte.

The second solid electrolyte 105 may contain incidental impurities, such as starting materials used in the synthesis of the solid electrolyte, by-products, and decomposition products. The same applies to the first solid electrolyte.

### <Other Materials>

A binding agent may be included in the positive electrode material 10 to improve adhesion between particles. The binding agent is used to improve the binding properties of the materials that form the positive electrode. Examples of the binding agent include polyvinylidene fluoride, polytetrafluoroethylene, polyethylene, polypropylene, aramid resins, polyamides, polyimides, polyamide-imides, polyacrylonitrile, polyacrylic acids, poly(methyl acrylate), poly(ethyl acrylate), poly(hexyl acrylate), polymethacrylic acids, poly(methyl methacrylate), poly(ethyl methacrylate), poly(hexyl methacrylate), polyvinyl acetate, polyvinylpyrrolidone, polyethers, polycarbonates, polyether sulfones, polyetherketones, polyetheretherketones, polyphenylene sulfides, hexafluoropolypropylene, styrene butadiene rubber, carboxymethyl cellulose, and ethyl cellulose. The binding agent may be a copolymer of two or more monomers selected from the group consisting of tetrafluoroethylene, hexafluoroethylene, hexafluoropropylene, perfluoroalkyl vinyl ether, vinylidene fluoride, chlorotrifluoroethylene, ethylene, propylene, butadiene, styrene, pentafluoropropylene, fluoromethyl vinyl ether, acrylic acid esters, acrylic acids, and hexadiene. One of those mentioned may be used alone, or two or more of those mentioned may be used in combination.

The binding agent may be an elastomer because elastomers have excellent binding properties. Elastomers are polymers having rubber elasticity. The elastomer for use as a binding agent may be a thermoplastic elastomer or a thermosetting elastomer. The binding agent may include a thermoplastic elastomer. Examples of the thermoplastic elastomer include styrene-ethylene-butylene-styrene (SEBS), styrene-ethylene-propylene-styrene (SEPS), styrene-ethylene-ethylene-propylene-styrene (SEEPS), butylene rubbers (BR), isoprene rubbers (IR), chloroprene rubbers (CR), acrylonitrile-butadiene rubbers (NBR), styrene-butylene rubbers (SBR), styrene-butadiene-styrene (SBS), styrene-isoprene-styrene (SIS), hydrogenated isoprene rubbers (HIR), hydrogenated butyl rubbers (HIIR), hydrogenated nitrile rubbers (HNBR), hydrogenated styrene-butylene rubber (HSBR), polyvinylidene fluoride (PVdF), and polytetrafluoroethylene (PTFE). One of these may be used alone, or two or more of these may be used in combination.

A conductive additive may be included in the coating layer 102 to enhance electron conductivity. Examples of the conductive additive include graphites, such as natural graphite and artificial graphite; carbon blacks, such as acetylene black and Ketjen black; conductive fibers, such as carbon fibers and metal fibers; carbon fluoride; metal powders, such as aluminum powders; conductive whiskers, such as zinc oxide whiskers and potassium titanate whiskers; conductive metal oxides, such as titanium oxide; and conductive polymers, such as polyaniline, polypyrrole, and polythiophene. In instances where a conductive carbon additive is used, cost reduction can be achieved.

Any of the above-mentioned conductive additives may be included in the positive electrode material 10 to enhance electron conductivity.

### <Method for Producing Coated Active Material>

The coated active material 100 can be produced in the following manner.

A mixture is prepared by mixing a powder of the positive electrode active material 101 with a powder of the first solid electrolyte in an appropriate ratio. The mixture is subjected to a milling process, in which mechanical energy is applied to the mixture. The milling process can be carried out with a mixer, such as a ball mill. The milling process may be performed in a dry and inert atmosphere so that oxidation of the materials can be inhibited.

The coated active material 100 may be produced with a dry particle-composing method. A process that uses the dry particle-composing method includes applying at least one type of mechanical energy selected from the group consisting of impact, compression, and shear to the positive electrode active material 101 and the first solid electrolyte. The ratio at which the positive electrode active material 101 is mixed with the first solid electrolyte is to be appropriate.

A machine that is used in the production of the coated active material 100 is not particularly limited and may be a machine that can apply mechanical energy of impact, compression, and shear to the mixture containing the positive electrode active material 101 and the first solid electrolyte. The machine that can apply mechanical energy may be a compression-shear processing machine (particle-composing machine), such as a ball mill, Mechanofusion (manufactured by Hosokawa Micron Corporation), or Nobilta (manufactured by Hosokawa Micron Corporation).

Mechanofusion is a particle-composing machine that uses a dry mechanical composing technique, which involves applying high mechanical energy to several different raw material powders. In Mechanofusion, raw material powders loaded between a rotating vessel and a press head are subjected to mechanical energy of compression, shear, and friction. Accordingly, the particles form a composite.

Nobilta is a particle-composing machine that uses a dry mechanical composing technique that has evolved from a particle-composing technique, to carry out the composing of nanoparticles used as a raw material. Nobilta produces composite particles by applying mechanical energy of impact, compression, and shear to several types of raw material powders.

Nobilta includes a horizontal cylindrical mixing vessel, in which a rotor is positioned with a predetermined gap between the rotor and an inner wall of the mixing vessel; with high-speed rotation of the rotor, the raw material powders are forcibly passed through the gap, and this process is repeated multiple times. Accordingly, a force of impact, compression, and shear acts on the mixture, and, consequently, composite particles formed of the positive electrode active material 101 and the first solid electrolyte can be produced. Conditions, such as a rotation speed of the rotor, a process time, and amounts of charge, can be adjusted to control the thickness of the coating layer 102, a coverage of the first solid electrolyte on the positive electrode active material 101, and the like.

Note that the process using any of the above-mentioned machines is not essential. The coated active material 100 may be produced by mixing the positive electrode active material 101 with the first solid electrolyte in a mortar, a mixer, or the like. The first solid electrolyte may be deposited onto the surface of the positive electrode active material 101 by using any of a variety of methods, such as a spray method, a spray-dry coating method, an electrodeposition method, a dipping method, and a mechanical mixing method that uses a dispersing machine.

### <Method for Producing Positive Electrode Material>

The positive electrode material 10 can be prepared by mixing the coated active material 100 with the second solid electrolyte 105. Methods for mixing the coated active material 100 with the second solid electrolyte 105 are not particularly limited. The coated active material 100 may be mixed with the second solid electrolyte 105 in a device, such as a mortar, or the coated active material 100 may be mixed with the second solid electrolyte 105 in a mixer, such as a ball mill.

### (Modified Embodiment)

Fig. 2 is a cross-sectional view illustrating a schematic configuration of a positive electrode material 20 of a modified embodiment. The positive electrode material 20 includes a coated active material 110 and the second solid electrolyte 105. The coated active material 110 includes the positive electrode active material 101 and a coating layer 104. The coating layer 104 includes a first coating layer 102 and a second coating layer 103. The first coating layer 102 is a layer containing the first solid electrolyte. The second coating layer 103 is a layer containing a base material. The first coating layer 102 is located outside of the second coating layer 103. With this configuration, the safety of a battery can be further improved.

The first coating layer 102 is a layer corresponding to the coating layer 102, which has been described with reference to Fig. 1.

The second coating layer 103 is located between the first coating layer 102 and the positive electrode active material 101. In this modified embodiment, the second coating layer 103 is in direct contact with the positive electrode active material 101. The base material that is included in the second coating layer 103 may be a material having low electron conductivity, such as an oxide material or an oxide solid electrolyte.

Examples of the oxide material include SiO₂, Al₂O₃, TiO₂, B₂O₃, Nb₂O₅, WO₃, and ZrO₂. Examples of the oxide solid electrolyte include Li-Nb-O compounds, such as LiNbO₃; Li-B-O compounds, such as LiBO₂ and Li₃BO₃; Li-Al-O compounds, such as LiAlO₂; Li-Si-O compounds, such as Li₄SiO₄; Li₂SO₄; Li-Ti-O compounds, such as Li₄Ti₅O₁₂; Li-Zr-O compounds, such as Li₂ZrO₃; Li-Mo-O compounds, such as Li₂MoO₃; Li-V-O compounds, such as LiV₂O₅; and Li-W-O compounds, such as Li₂WO₄. The base material may be one of these or a mixture of two or more of these.

The base material may be a solid electrolyte having lithium ion conductivity. Typically, the base material is an oxide solid electrolyte having lithium ion conductivity. Oxide solid electrolytes have high ionic conductivity and excellent high-potential stability. In the instance where an oxide solid electrolyte is used as the base material, the charge-discharge efficiency of a battery can be improved.

The base material may be a material containing Nb. Typically, the base material includes lithium niobate (LiNbOs). With this configuration, the charge-discharge efficiency of a battery can be improved. The oxide solid electrolyte that serves as the base material may be any of the materials described above.

In one example, the ionic conductivity of the halide solid electrolyte present in the first coating layer 102 is higher than the ionic conductivity of the base material present in the second coating layer 103. With this configuration, oxidation of the second solid electrolyte 105 can be further inhibited without compromising the ionic conductivity.

The first coating layer 102 has a thickness of, for example, greater than or equal to 1 nm and less than or equal to 500 nm. The second coating layer 103 has a thickness of, for example, greater than or equal to 1 nm and less than or equal to 100 nm. In the instance where the thicknesses of the first coating layer 102 and the second coating layer 103 are appropriately adjusted, contact between the positive electrode active material 101 and the second solid electrolyte 105 can be sufficiently inhibited. The thickness of each of the layers can be determined in the manner described above.

The coated active material 110 can be produced in the following manner.

First, the second coating layer 103 is formed on the surface of the positive electrode active material 101. Methods for forming the second coating layer 103 are not particularly limited. Examples of the methods for forming the second coating layer 103 include liquid-phase coating methods and vapor-phase coating methods.

For example, a liquid-phase coating method is as follows. A precursor solution for the base material is applied to the surface of the positive electrode active material 101. In instances where a second coating layer 103 containing LiNbO₃ is to be formed, the precursor solution may be a mixed solution (sol solution) of a solvent, a lithium alkoxide, and a niobium alkoxide. Examples of the lithium alkoxide include lithium ethoxide. Examples of the niobium alkoxide include niobium ethoxide. Examples of the solvent include alcohols, such as ethanol. Amounts of the lithium alkoxide and the niobium alkoxide are to be adjusted in accordance with a target composition of the second coating layer 103. If necessary, water may be added to the precursor solution. The precursor solution may be acidic or alkaline.

Methods for applying the precursor solution to the surface of the positive electrode active material 101 are not particularly limited. For example, the precursor solution can be applied to the surface of the positive electrode active material 101 in a tumbling fluidized bed granulating-coating machine. The tumbling fluidized bed granulating-coating machine can apply the precursor solution to the surface of the positive electrode active material 101 by spraying the precursor solution onto the positive electrode active material 101 while tumbling and fluidizing the positive electrode active material 101. Accordingly, a precursor coating is formed on the surface of the positive electrode active material 101. Subsequently, the positive electrode active material 101 coated with the precursor coating is heat-treated. The heat treatment causes the gelation of the precursor coating to proceed, which leads to the formation of the second coating layer 103.

Examples of the vapor-phase coating methods include pulsed laser deposition (PLD) methods, vacuum vapor deposition methods, sputtering methods, thermal chemical vapor deposition (CVD) methods, and plasma chemical vapor deposition methods. The PLD methods are carried out, for example, as follows. A high-energy pulsed laser (e.g., a KrF excimer laser, wavelength: 248 nm) is applied onto an ion-conducting material used as a target, to cause the sublimed ion-conducting material to be deposited onto the surface of the positive electrode active material 101. In instances where a second coating layer 103 of LiNbO₃ is to be formed, the target to be used is densely sintered LiNbO₃.

Note that the method for forming the second coating layer 103 is not limited to the methods mentioned above. The second coating layer 103 may be formed with any of a variety of methods, such as a spray method, a spray-dry coating method, an electrodeposition method, a dipping method, and a mechanical mixing method that uses a dispersing machine.

After the second coating layer 103 has been formed, the first coating layer 102 is formed in the manner described above. Accordingly, the coated active material 110 can be produced.

### (Second Embodiment)

Fig. 3 is a cross-sectional view illustrating a schematic configuration of a battery of a second embodiment. A battery 200 includes a positive electrode 201, a separator layer 202, and a negative electrode 203. The separator layer 202 is disposed between the positive electrode 201 and the negative electrode 203. The positive electrode 201 includes at least one of the positive electrode material 10 or the positive electrode material 20, described in the first embodiment. With this configuration, the battery 200 can have improved safety.

The positive electrode 201 and the negative electrode 203 may each have a thickness of greater than or equal to 10 µm and less than or equal to 500 µm. When the thicknesses of the positive electrode 201 and the negative electrode 203 are greater than or equal to 10 µm, a sufficient energy density of the battery can be ensured. When the thicknesses of the positive electrode 201 and the negative electrode 203 are less than or equal to 500 µm, a high-power operation of the battery 200 can be achieved.

The separator layer 202 is a layer containing an electrolyte material. The separator layer 202 may include at least one solid electrolyte selected from the group consisting of a sulfide solid electrolyte, an oxide solid electrolyte, a halide solid electrolyte, a polymeric solid electrolyte, and a complex hydride solid electrolyte. Details of the solid electrolytes are as described in the first embodiment.

The separator layer 202 may have a thickness of greater than or equal to 1 µm and less than or equal to 300 µm. When the thickness of the separator layer 202 is greater than or equal to 1 µm, the positive electrode 201 and the negative electrode 203 can be more reliably separated from each other. When the thickness of the separator layer 202 is less than or equal to 300 µm, a high-power operation of the battery 200 can be achieved.

The negative electrode 203 includes a negative electrode active material that is a material having a property of occluding and releasing metal ions (e.g., lithium ions).

Examples of the negative electrode active material include metal materials, carbon materials, oxides, nitrides, tin compounds, and silicon compounds. The metal materials may be elemental metals. The metal materials may be alloys. Examples of the metal materials include lithium metals and lithium alloys. Examples of the carbon materials include natural graphite, coke, partially graphitized carbon, carbon fibers, spherical carbon, artificial graphite, and amorphous carbon. Silicon (Si), tin (Sn), a silicon compound, a tin compound, or the like may be used; these are suitable from the standpoint of a capacity density.

Particles of the negative electrode active material may have a median diameter of greater than or equal to 0.1 µm and less than or equal to 100 µm.

The negative electrode 203 may include one or more additional materials, such as a solid electrolyte. The solid electrolyte may be any of the materials described in the first embodiment.

### EXAMPLES

Details of the present disclosure will now be described with reference to Examples and a Comparative Example. Note that electrodes and batteries of the present disclosure are not limited to the Examples described below.

### <Example 1>

### [Preparation of First Solid Electrolyte]

In an argon glove box with a dew point of -60°C or less, raw material powders of YCl₃, LiCl, and LiBr were weighed such that a molar ratio of YCl₃:LiCl:LiBr = 1:1:2 was achieved. These were ground and mixed in an agate mortar to form a mixture. The mixture was heat-treated in an electric furnace under the conditions of 2 hours and 520°C. In this manner, Li₃YBr₂Cl₄ (hereinafter denoted as "LYBC") that was a halide solid electrolyte was prepared. p-Chlorotoluene was added to the LYBC, and the LYBC was then ground in a wet grinding and dispersing machine and subsequently dried. In this manner, a powder of LYBC (median diameter D50 = 0.4 µm) was prepared to be used as the first solid electrolyte.

### [Preparation of Coated Active Material]

In an argon glove box, 5.95 g of lithium ethoxide (manufactured by Koujundo Chemical Laboratory Co., Ltd.) and 36.43 g of niobium pentaethoxide (manufactured by Koujundo Chemical Laboratory Co., Ltd.) were dissolved in 500 mL of super-dehydrated ethanol (manufactured by FUJIFILM Wako Pure Chemical Corporation) to form a coating solution.

A powder of Li(Ni,Co,Al)O₂ (hereinafter denoted as "NCA") was prepared to be used as the positive electrode active material. The process of forming a coating layer of LiNbO₃ on a surface of the NCA was performed with a tumbling fluidized bed granulating-coating machine (FD-MP-01E, manufactured by Powrex Corporation). The amount of NCA charged was 1 kg, a stirring speed was 400 rpm, and a pumping rate for the coating solution was 6.59 g/minute. The amount of the coating solution to be charged was adjusted such that the thickness of LiNbO₃ could be 10 nm. The amount of the coating solution to be charged was calculated from the specific surface area of the active material and a density of the LiNbO₃. The series of steps in the tumbling fluidized bed granulating-coating machine were carried out in a dry atmosphere having a dew point of -30°C or less. After the process of forming a coating layer of LiNbO₃ was completed, the resulting powder was placed into an alumina crucible and heat-treated under the conditions of an air atmosphere, 300°C, and 1 hour. The heat-treated powders were reground in an agate mortar. In this manner, NCA having a coating layer of LiNbO₃ was prepared. The coating layer was made of lithium niobate (LiNbO₃). The NCA having a coating layer of LiNbO₃ is hereinafter denoted as "Nb-NCA".

Next, a first coating layer made of the LYBC was formed on a surface of the Nb-NCA. The first coating layer was formed with a compression-shear process in a particle composing machine (NOB-MINI, manufactured by Hosokawa Micron Corporation). Specifically, the Nb-NCA and the LYBC were weighed such that a volume ratio of Nb-NCA to LYBC of 85:15 was achieved, and the process was carried out under the conditions of a blade clearance of 2 mm, a rotational speed of 6000 rpm, and a process time of 50 min. In this manner, a coated active material of Example 1 was prepared.

### <Example 2>

A coated active material of Example 2 was prepared in the same manner as in Example 1, except that the volume ratio between Nb-NCA and LYBC was changed to 90:10.

### <Example 3>

A coated active material of Example 3 was prepared in the same manner as in Example 1, except that the volume ratio between Nb-NCA and LYBC was changed to 92:8.

### <Example 4>

A coated active material of Example 4 was prepared in the same manner as in Example 1, except that the volume ratio between Nb-NCA and LYBC was changed to 95:5.

### <Example 5>

A coated active material of Example 5 was prepared in the same manner as in Example 1, except that the volume ratio between Nb-NCA and LYBC was changed to 97:3.

### <Example 6>

The Nb-NCA and the LYBC were weighed such that a volume ratio of Nb-NCA to LYBC of 90:10 was achieved. The Nb-NCA and the LYBC were mixed in an agate mortar for 30 minutes. In this manner, a coated active material of Example 6 was prepared.

### <Comparative Example 1>

The Nb-NCA was used as a coated active material of Comparative Example 1.

### [Preparation of Sulfide Solid Electrolyte]

In an argon glove box with a dew point of -60°C or less, raw material powders of Li₂S and P₂S₅ were weighed such that a molar ratio of Li₂S:P₂S₅ = 75:25 was achieved. These were ground and mixed in an agate mortar to form a mixture. Subsequently, the mixture was subjected to a milling process in a planetary ball mill (P-7 model, manufactured by Fritsch) under the conditions of 10 hours and 510 rpm. In this manner, a glassy solid electrolyte was prepared. The glassy solid electrolyte was heat-treated in an inert atmosphere under the conditions of 270°C and 2 hours. In this manner, Li₂S-P₂S₅ (hereinafter denoted as "LPS") that was a glass-ceramic solid electrolyte was prepared.

### [Preparation of Positive Electrode Material]

In an argon glove box, the coated active material of Example 1 and the LPS were weighed such that a volume ratio between the Nb-NCA and the solid electrolytes of 75:25 was achieved. These were mixed in an agate mortar to give a positive electrode material of Example 1. Regarding the volume ratio between the Nb-NCA and the solid electrolytes, the "solid electrolytes" means the total volume of the LYBC and the LPS.

Positive electrode materials of Examples 2 to 6 and Comparative Example 1 were prepared in the same manner as in Example 1. The positive electrode materials of the Examples and the Comparative Example each had the ratio of the volume of LYBC to the total volume of LYBC and LPS shown in Table 1.

### [Preparation of Battery]

The positive electrode material was weighed such that 14 mg of the Nb-NCA was present therein. In an insulating cylinder, the LPS and the positive electrode material were stacked in the order stated. The resulting multilayer body was pressure-molded at a pressure of 720 MPa. Next, lithium metal was placed in contact with the LPS layer, and the resultant was pressure-molded again at a pressure of 40 MPa. In this manner, a multilayer body formed of a positive electrode, a solid electrolyte layer, and a negative electrode was prepared. Next, a stainless steel current collector was placed on upper and lower sides of the multilayer body. A current collector lead was attached to each of the current collectors. Next, the cylinder was sealed with an insulating ferrule to isolate the interior of the cylinder from the ambient environment. By performing these steps, batteries of Examples 1 to 6 and Comparative Example 1 were produced. The batteries were each constrained with four bolts from upper and lower sides to apply an interface pressure of 150 MPa to the batteries.

### [Preparation of Thermal Analysis Samples]

The batteries were placed in a constant-temperature chamber at 25°C. The batteries were charged at a constant current of 147 µA, which was a current value corresponding to a 0.05 C rate (20 hour rate) with respect to a theoretical capacity of the batteries, until a voltage of 4.3 V was reached. The batteries were charged at a constant voltage of 4.3 V until a current value of 2.9 µA was reached.

The batteries in a charged state were disassembled in an argon glove box, and only the positive electrode materials were taken out. Then, 2 mg of each of the positive electrode materials was sealed in a stainless steel closed pan. In this manner, thermal analysis samples of Examples 1 to 6 and Comparative Example 1 were prepared.

### [Performing of Thermal Analysis]

A thermal analysis was performed on the thermal analysis samples of Examples 1 to 6 and Comparative Example 1 under the following conditions.

The thermal analysis was carried out with a differential scanning calorimeter (Q1000, manufactured by TA Instruments). A heating condition was 10°C/minute over a range of 0°C to 400°C. In a thermal analysis curve, the temperature at which a peak occurred was considered to be an exotherm onset temperature. The results are shown in Table 1.

**[Table 1]**

| | LYBC/Nb-NCA (vol%) | LYBC/(LYBC+LPS) (vol%) | Exotherm onset temperature (°C) |
|---|---|---|---|
| Example 1 | 15 | 60 | 202.98 |
| Example 2 | 10 | 40 | 195.95 |
| Example 3 | 8 | 32 | 184.86 |
| Example 4 | 5 | 20 | 183.9 |
| Example 5 | 3 | 12 | 178.94 |
| Example 6 | 10 (mortar) | 40 | 182 |
| Comparative Example 1 | 0 | 0 | 170.61 |

### <Discussion>

As shown in Table 1, higher volume ratios of the halide solid electrolyte in the positive electrode material resulted in higher exotherm onset temperatures. Thus, it was demonstrated that a reaction between oxygen released from the positive electrode active material and the sulfide solid electrolyte was inhibited, and, consequently, the safety of a battery was improved.

It is presumed that if the volume of LYBC relative to the volume of Nb-NCA is less than 1%, coating the Nb-NCA with the LYBC is difficult. Accordingly, the ratio of the volume of LYBC to the volume of Nb-NCA is desirably greater than or equal to 1%. The upper limit of the ratio of the volume of LYBC to the volume of Nb-NCA is, for example, 15%.

The thermal analysis sample of Example 2 exhibited an exotherm onset temperature higher than the exotherm onset temperature of the thermal analysis sample of Example 6. That is, a battery having a high level of safety can be realized more easily by using a coated active material prepared by mixing Nb-NCA with LYBC in a particle composing machine than by using a coated active material prepared by mixing Nb-NCA with LYBC in an agate mortar. Presumably, this was because as a result of using a particle composing machine, the surface of the Nb-NCA particles was uniformly coated with the

### LYBC.

### Industrial Applicability

The technology of the present disclosure is useful, for example, in an all-solid-state lithium secondary battery.

### Reference Signs List

10, 20 positive electrode material
100, 110 coated active material
101 positive electrode active material
102 first coating layer
103 second coating layer
104 coating layer
105 second solid electrolyte
200 battery
201 positive electrode
202 separator layer
203 negative electrode

## Claims

1. A positive electrode material comprising:
a positive electrode active material;
a coating layer containing a first solid electrolyte and coating at least a portion of a surface of the positive electrode active material; and
a second solid electrolyte, wherein
the first solid electrolyte contains Li, M, and X, where M is at least one selected from the group consisting of metalloid elements and metal elements other than Li, and X is at least one selected from the group consisting of F, Cl, Br, and I,
the second solid electrolyte is in indirect contact with the positive electrode active material with the coating layer disposed between the second solid electrolyte and the positive electrode active material, and
a ratio of a volume of the first solid electrolyte to a total volume of the first solid electrolyte and the second solid electrolyte is greater than or equal to 4% and less than or equal to 60%.

2. The positive electrode material according to claim 1, wherein the second solid electrolyte contains Li and S.

3. The positive electrode material according to claim 1 or 2, wherein M includes yttrium.

4. The positive electrode material according to any one of claims 1 to 3, wherein the first solid electrolyte is represented by Formula 1:
Li_{α}M_{β}X_{γ} (1)
where α, β, and γ are each independently a value greater than 0.

5. The positive electrode material according to any one of claims 1 to 4, wherein
the coating layer includes a first coating layer and a second coating layer, the first coating layer contains the first solid electrolyte, and the second coating layer contains a base material, and
the first coating layer is located outside of the second coating layer.

6. The positive electrode material according to claim 5, wherein the base material contains an oxide solid electrolyte having lithium ion conductivity.

7. The positive electrode material according to claim 5 or 6, wherein the base material contains lithium niobate.

8. A positive electrode comprising the positive electrode material according to any one of claims 1 to 7.

9. A battery comprising the positive electrode according to claim 8.
